# EUROPÄISCHE PATENTANMELDUNG

(11) **EP 3 007 328 A1**
(43) Veröffentlichungstag der Anmeldung: **13.04.2016**
(21) Anmeldenummer: 14188128.4
(22) Anmeldetag: 08.10.2014
(51) Int. Cl.: H02K 3/38, H02K 15/00, H02K 3/12

(54) **Aktivteil einer elektrischen Maschine**

(71) Anmelder: Siemens Aktiengesellschaft, 80333 München (DE)
(72) Erfinder: BOGDAN, Zolt, 24000 Subotica (RS); BRENNER, Robin, 94036 Passau (DE); ILES, Janos, 24000 Subotica (RS); LINDMEIER, Andreas, 94099 Ruhstorf (DE); RATZISBERGER, Dominik, 94149 Kösslarn (DE); SCHÖNBAUER, Norbert, 94072 Bad Füssing (DE)

(57) **Zusammenfassung**

Die Erfindung betrifft ein Aktivteil (18) einer elektrischen Maschine (10) mit mehreren Spulen (20), welche jeweils einen Teilleiter (24) aufweisen. Die Spulen (20) sind durch Windungen ihrer Teilleiter (24) gebildet, wobei die Windungen einer Spule (20) jeweils eine vorbestimmte Windungslänge aufweisen. Zudem weist das Aktivteil (18) ein Trägerteil (22) auf, in dessen Nuten die Spulen (20) angeordnet sind. Die Spulen (20) weisen einen Wickelkopfbereich aufweisen, der an einer Stirnfläche des Trägerteils (22) hinausragt. Die Spulen (20) sind dabei in Form einer Etagenwicklung angeordnet. Aufgabe der Erfindung ist es, ein Aktivteil einer elektrischen Maschine und insbesondere deren Wickelkopfbereich besonders kompakt zu gestalten. Diese Aufgabe wird gelöst, indem zumindest eine der Spulen (20) im Wickelkopfbereich durch eine Anordnung ihres Teilleiters (24) im Querschnitt eine V-Form aufweist.

## Beschreibung

Die vorliegende Erfindung betrifft ein Aktivteil einer elektrischen Maschine. Dabei weist das Aktivteil mehrere Spulen, welche jeweils einen Teilleiter aufweisen, und ein Trägerteil auf, in dessen Nuten die Spulen angeordnet sind. Die Spulen sind durch Windungen ihrer Teilleiter gebildet, wobei die Windungen einer Spule jeweils eine vorbestimmte Windungslänge aufweisen. Zudem weisen die Spulen mindestens einen Wickelkopfbereich auf, der an einer Stirnfläche des Trägerteils hinausragt. Zudem sind die Spulen in Form einer Etagenwicklung angeordnet. Darüber hinaus umfasst die Erfindung eine elektrische Maschine mit dem erfindungsgemäßen Aktivteil und ein Verfahren zum Herstellen dieses Aktivteils.

Elektrische Maschinen wie Motoren, Generatoren und Transformatoren besitzen jeweils ein oder mehrere Aktivteile, die magnetisch aktiv sind. Ein Motor beispielsweise weist einen Ständer und einen Läufer als jeweiliges Aktivteil auf.

In dem Ständer und/oder Läufer eines Motors oder Generators können Spulen eingelegt beziehungsweise eingewickelt sein. Typischerweise befinden sich die Spulen dann in oder an einem Blechpaket. In der Regel ragen aus den Stirnflächen der zylindrischen oder hohlzylindrischen Blechpakete die Spulen heraus und bilden einen Wickelkopf des Läufers beziehungsweise Ständers. Dieses Blechpaket kann aus mehreren Segmenten bestehen. Der Wickelkopf elektrischer Maschinen gehört zu den magnetisch inaktiven Teilen, die nicht zur Drehmomentenbildung beitragen.

Daher ist es das Bestreben, die Leiterlänge und die Ausladung des Wickelkopfes möglichst gering zu halten, um unnötigen Platzbedarf, Gewicht und Verluste zu vermeiden.

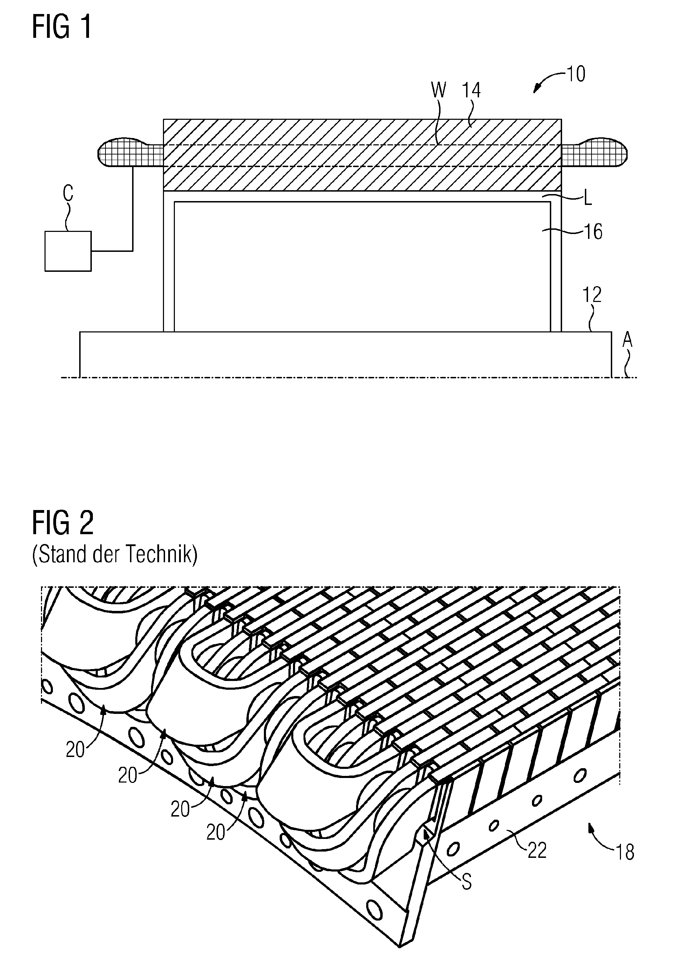

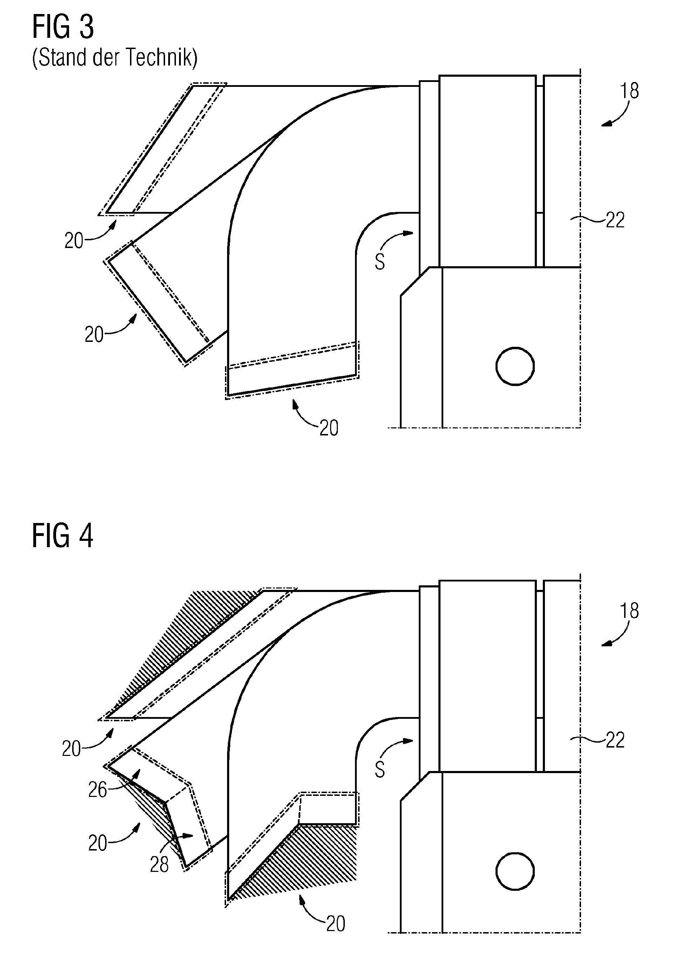

In FIG 2 und FIG 3 ist beispielhaft ein herkömmlicher Wickelkopf einer Drei-Etagenwicklung dargestellt, wie er aus der WO 2011/006693 A2 bekannt ist. Dies bedeutet, dass hier die Spulen 20 in drei Etagen beziehungsweise drei Ebenen übereinander liegen. Die drei Spulen 20 ragen aus einem Trägerteil 22, an dem die Spulen 20 in Nuten angeordnet sind. Die drei Spulen 20 weisen jeweils in der Etagenwicklung eine Neigung von 0-Grad (0°), 45-Grad (45°) und 90-Grad (90°) gegenüber der Längserstreckungsrichtung der Wicklungen auf. Die einzelnen Spulen 20 treten zunächst senkrecht aus der Stirnfläche S des Trägerteils 22 aus. Die 90°-Spule ist, wie in dem Beispiel von FIG 1 und FIG 2 gezeigt, senkrecht nach unten gekrümmt. Das Ende der 90°-Spule verläuft also parallel zur Längsachse des Aktivteils 18 und der Wicklungen. Die zweite Spule hingegen verläuft am Ende in einem 45°- Winkel zu der Stirnfläche S des Trägerteils 22. Die dritte Spule, das heißt die 0°-Spule, verläuft in dieser Schnittansicht geradlinig aus der Stirnfläche S des Trägerteils 22. Die Enden jeder Spule ergeben sich durch die Anordnung der Windungen ihrer Teilleiter 24. Durch die Anordnung der Windungen des Teilleiters 24 einer Spule ergibt sich eine Neigungsfläche am Ende der Spule 20.

Die Aufgabe der Erfindung besteht darin, ein Aktivteil einer elektrischen Maschine und insbesondere deren Wickelkopfbereich besonders kompakt zu gestalten.

Diese Aufgabe wird erfindungsgemäß durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird diese Aufgabe gelöst durch ein Aktivteil einer elektrischen Maschine mit mehreren Spulen, welche jeweils einen Teilleiter aufweisen, und einem Trägerteil, in dessen Nuten die Spulen angeordnet sind. Die Spulen sind durch Windungen ihrer Teilleiter gebildet, wobei die Windungen einer Spule jeweils eine vorbestimmte Windungslänge aufweisen. Dabei kann ein Teilleiter beispielsweise aus einem oder mehreren, insbesondere zwei, Drähten bestehen, wobei die Drähte eines Teilleiters nebeneinander angeordnet sein können. Zudem weisen die Spulen einen Wickelkopfbereich auf, der an einer Stirnfläche des Trägerteils hinausragt. Zudem sind die Spulen in Form einer Etagenwicklung angeordnet. Zumindest weist eine der Spulen im Wickelkopfbereich durch eine Anordnung ihres Teilleiters im Querschnitt eine V-Form auf. Dadurch ergibt sich der Vorteil, dass die Leiterlänge im Wickelkopf minimiert und ein kompakteres Aktivteil hergestellt werden kann. Ferner kann die Baulänge der Maschine verringert werden, wodurch Gewicht und Kosten der elektrischen Maschine sinken. Mit Querschnitt ist hier eine Schnittebene gemeint, welche senkrecht zur horizontalen Stromflussrichtung ausgerichtet ist. Mit anderen Worten ist hier mit Querschnitt die Querschnittsebene gemeint, welche sich in Längsrichtung und gleichzeitig senkrecht zur Längsrichtung des Aktivteils erstreckt. Mit Stirnfläche des Trägerteils ist beispielsweise die Fläche gemeint, welche sich an einem Ende des Trägerteils quer zur Längsachse des Trägerteils erstreckt. Ein Teilleiter kann beispielsweise auch aus einem oder mehreren, insbesondere zwei, Drähten bestehen. Besteht ein Teilleiter beispielsweise aus zwei oder mehreren Drähten, so können die Drähte eines Teilleiters nebeneinander angeordnet sein.

Vorzugsweise ist das Aktivteil als Ständer oder Läufer ausgebildet. Damit kann die entsprechende elektrische Maschine kompakter aufgebaut werden als eine Maschine mit einem herkömmlichen Ständer beziehungsweise Läufer mit üblicher Wickelkopfgestaltung. Daraus ergibt sich der Vorteil, dass die Verluste aufgrund eines geringeren Widerstandes sinken, hervorgerufen durch eine geringere Teilleiterlänge, und der Wirkungsgrad steigt.

Da die drei Spulen der Etagenwicklung unterschiedliche Wicklungslängen aufweisen können, ergibt sich ein unterschiedlicher elektrischer Widerstand. Eine weitere Ausführungsform der Erfindung sieht vor, dass die Windungslängen der Spulen paarweise zueinander einen Unterschied von maximal 5%, insbesondere 3%, aufweisen. Mit anderen Worten darf der Unterschied nicht mehr als 5%, insbesondere nicht mehr als 3%, zwischen den Windungslängen betragen. Daher bestimmt die längste Spule die minimale Länge der übrigen beiden Spulen. Mit Windungslänge ist die Länge gemeint, welche sich für den gesamten Leiter, d.h. den Teilleiter, einer Spule ergeben würde, wenn der Teilleiter der Spule entwunden und komplett ausgerollt wäre. Daraus ergibt sich der Vorteil, dass ein gleichmäßiges Drehfeld ermöglicht werden kann.

Vorzugsweise können die Spulen zueinander einen vorgegebenen Mindestabstand aufweisen, wobei immer drei der Spulen in der Etagenwicklung jeweils eine Neigung von 0°, 45° und 90° gegenüber der Stirnfläche des Trägerteils aufweisen, wobei die Spule mit der Neigung von 45° eine V-Form im Querschnitt aufweist. Mit Mindestabstand zwischen den Spulen ist hier die Luftstrecke zwischen den Spulen gemeint. Damit können die Spulen auch im Hinblick auf ihre Neigung im Wickelkopfbereich verteilt angeordnet werden. Das hat den Vorteil, dass auch unter Einhaltung der erforderlichen Luftstrecke das Aktivteil, d.h. der Läufer oder Ständer, kompakter gestaltet werden kann, da nun auch die 0°-Spule und die 90°-Spule im Querschnitt im Wickelkopfbereich gewinkelt angeordnet werden können. Die Neigung der Spulen kann jeweils einen Toleranzbereich zwischen -25° und +25° aufweisen. Mit Toleranzbereich ist hier ein positiver oder negativer Wert einer Abweichung von dem jeweiligen Wert des Winkels der Neigung der Spule gegenüber der Stirnfläche gemeint.

Eine weitere Ausführungsform der Erfindung sieht vor, dass zumindest eine Spule in zweiteiliger Form ausgebildet ist, wobei die Spule im Wickelkopfbereich in einen ersten Spulenteil und in einen zweiten Spulenteil aufgeteilt ist, von denen jeder einen Schenkel der V-Form bildet und wobei der erste und der zweite Spulenteil unabhängig voneinander isoliert sind. Mit anderen Worten kann zumindest eine Spule zweiteilig ausgeführt und zweigeteilt isoliert sein. Daraus ergibt sich der Vorteil, dass die Spulenlänge weiter optimiert werden kann. Die zweiteilige Ausführungsform der Isolierung hat den Vorteil, dass sich durch die Isolierung der Spule keine Hohlräume bilden.

In vorteilhafter Weise können die Teilleiter eine Teilleiterisolierung und die Spule und/oder der erste Spulenteil und der zweite Spulenteil jeweils eine erste Bandisolierung aufweisen.

Weiterhin können der erste und der zweite Spulenteil mittels einer zweiten Bandisolierung zusammengehalten werden. Eine Bandisolierung ist zur Isolierung elektrischer Leiter, insbesondere zur Isolierung der Wicklungen elektrischer Maschinen, geeignet. Zur Isolierung elektrischer Leiter kann das Isolierband der Bandisolierung in Form von verhältnismäßig schmalen Bändern oder auch in Form breiter Bahnen um den zu isolierenden Leiter herumgewickelt werden, bis die erforderliche Stärke der herzustellenden Isolierhülse erreicht ist. Demnach sind unter dem Begriff "Bandisolierung" sowohl schmale Bänder als auch breite Bänder zu verstehen.

Zu der Erfindung gehört auch eine elektrische Maschine mit einem Aktivteil.

Darüber hinaus umfasst die Erfindung ein Verfahren zum Herstellen eines Aktivteils. Dabei werden zunächst Spulen in Nuten eines Trägerteils angeordnet. An einer Stirnfläche des Trägerteils wird ein Wickelkopfbereich gebildet. Dabei weisen die Spulen einen Wickelkopfbereich auf, der an einer Stirnfläche des Trägerteils hinausragt. Als nächstes werden die Spulen in Form einer Etagenwicklung angeordnet. In einem letzten Verfahrensschritt wird eine der Spulen mit einem Wickelkopfbereich, der eine V-Form im Querschnitt aufweist, bereitgestellt.

In vorteilhafter Weise kann zumindest eine der Spulen in einen ersten Spulenteil und einen zweiten Spulenteil aufgeteilt werden, wobei der erste und der zweite Spulenteil unabhängig voneinander mittels einer ersten Bandisolierung isoliert und mittels einer zweiten Bandisolierung zusammengehalten werden, wodurch im Wickelkopfbereich im Querschnitt eine V-Form gebildet wird.

Die zuvor im Zusammenhang mit dem erfindungsgemäßen Aktivteil beschriebenen Vorteile und Weiterbildungen können auch auf das Verfahren zum Herstellen eines Aktivteils übertragen werden.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: einen Wickelkopf einer Drei-Etagenwicklung mit nach unten geneigten Spulen gemäß dem Stand der Technik;
- FIG 3: einen Wickelkopf einer Drei-Etagenwicklung mit unterschiedlich geneigten Spulen gemäß dem Stand der Technik;
- FIG 4: einen Wickelkopf einer Drei-Etagenwicklung mit unterschiedlich geneigten Spulen gemäß der vorliegenden Erfindung;
- FIG 5: eine schematische Darstellung einer zweigeteilten Spule mit einer im Wickelkopfbereich aufweisenden V-Form im Querschnitt; und
- FIG 6: eine schematische Darstellung einer zweigeteilten Spule mit einer im Wickelkopfbereich aufweisenden V-Form im Querschnitt.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In FIG 1 ist ein allgemeiner Aufbau einer elektrischen Maschine dargestellt. Bei der elektrischen Maschine 10 kann es sich beispielsweise um einen Motor oder einen Generator handeln. In FIG 1 stellt eine Rotationsachse A auch eine Symmetrieachse der Darstellung dar. Die elektrische Maschine 10 umfasst einen Stator 14, in welchem Wicklungen W elektrischer Spulen angeordnet sind, wobei in FIG 1 nur eine der Wicklungen W dargestellt ist. Die Wicklungen W werden durch eine Drehstromquelle C abwechselnd bestromt, wodurch im Inneren des Stators 14 ein magnetisches Drehfeld in einem Luftspalt L der elektrischen Maschine 10 entsteht. Die Drehstromquelle C kann beispielsweise ein Wechselrichter sein oder ein festfrequentes elektrisches Versorgungsnetz.

Im Inneren des Stators 14 befindet sich ein Rotor 16, der drehfest mit einer Welle 12 verbunden ist. Die Welle 12 ist um die Rotationsachse A drehbar und in dem Stator 14 gelagert. Es kann sich aber auch um einen außenliegenden Rotor handeln. Bei einem außenliegenden Rotor ist der Stator im Inneren des Rotors angeordnet.

In FIG 4 ist das erfindungsgemäße Aktivteil 18 mit einem Wickelkopf einer Drei-Etagenwicklung dargestellt. Bei dem Aktivteil 18 kann es sich beispielsweise um einen Läufer oder einen Ständer handeln. Das Aktivteil 18 kann beispielsweise auch für einen Käfigläufer und/oder Schleifringläufer angewendet werden. Dabei sind drei Spulen 20 in drei Etagen beziehungsweise drei Ebenen übereinander gelegt. Die drei Spulen 20 ragen an der Stirnfläche S aus einem Trägerteil 22 des Aktivteils 18 heraus. Das äußerste Ende jeder Spule 20 weist in dem Wickelkopfbereich eine spezielle Anordnung auf, auf die im Folgenden näher eingegangen wird.

Die einzelnen Spulen 20 treten zunächst senkrecht aus einer Stirnfläche S des Trägerteils 22 aus. Die erste Spule ist, wie in FIG 4 dargestellt, senkrecht nach unten gebogen. Die erste Spule verläuft am Ende in einem 90°-Winkel zu der Stirnfläche S des Trägerteils 22. Die Neigungsebene, d.h. die Neigung welche die Spule bezüglich der Stirnfläche S einnimmt, der 90°-Spule verläuft parallel zur Stirnfläche S und senkrecht zur Längsachse des Aktivteils 18. Diese Spule wird im Folgenden als 90°-Spule bezeichnet. Die zweite Spule hingegen verläuft in einem 45°-Winkel zu der Stirnfläche S des Trägerteils 22. Mit anderen Worten verläuft die Neigungsebene der zweiten Spule in einem 45°-Winkel zur Stirnfläche S. Die dritte Spule verläuft geradlinig aus der Stirnfläche S des Trägerteils 22 heraus. Die Neigungsebene dieser Spule verläuft somit senkrecht zu der Stirnfläche S des Trägerteils 22 und nimmt somit einen Neigungswinkel von 0° ein. Die zweite und die dritte Spule werden im Folgenden mit 45°-Spule und 0°-Spule bezeichnet.

Wie aus FIG 4 hervorgeht, weisen die Enden aller drei Spulen 20 (90°, 45° und 0°) im Wickelkopfbereich unterschiedliche Anordnungen auf. Diese Anordnung ergibt sich durch die Anordnung der Teilleiter 24. Jede Spule 20 weist einen Teilleiter 24 auf. Die Spulen 20 sind dabei durch Windungen ihrer Teilleiter 24 gebildet. Somit verläuft die Neigungsfläche des Wickelkopfbereichs am Ende jeder Spule 20, welche sich durch die spezielle Anordnung der Windungen des Teilleiters 24 der jeder Spule bildet, mit einer speziellen Neigung zur Stirnfläche S des Trägerteils 22. Die 0°-Spule, die 45°-Spule und die 90°-Spule weisen einen gekröpften Verlauf auf, sodass die nicht gebogenen Teile der Spule 20 einen parallelen Verlauf aufweisen.

Die 0°-Spule weist an ihrem Ende eine geneigte Anordnung gegenüber der horizontalen Rotationsachse, d.h. der Längsachse des Aktivteils, bzw. gegenüber der Neigungsebene der 0°-Spule, welche sich senkrecht zur Stirnfläche S des Trägerteils 22 erstreckt, auf. Die geneigte Anordnung im Wickelkopfbereich der 0°-Spule ergibt sich durch eine Anordnung der Windungen ihres Teilleiters 24. Die Windungen des Teilleiters 24 der 0°-Spule 20 liegen bezüglich der horizontalen Rotationsachse bzw. der Neigungsebene der 0°-Spule nicht senkrecht übereinander. Stattdessen liegen die Windungen des Teilleiters 24 bezogen auf die horizontale Rotationsachse schräg übereinander. Dabei verläuft die Neigungsfläche des Wickelkopfbereichs am Ende der 0°-Spule 20, welche sich durch die schräge Anordnung der Windungen des Teilleiters 24 der 0°-Spule bildet, mit einer Neigung in Richtung der Stirnfläche S des Trägerteils 22 zur horizontalen Rotationsachse von 45°. Insbesondere parallel zur 45°-Spule, d.h. konstante Luftstrecke im gesamten Wickelkopf. Der schraffierte Bereich, welcher am Ende der Spulen 20 in FIG 4 angeordnet ist, welcher bei allen drei Spulen auftritt, stellt die Materialeinsparung dar, welche sich durch die Anordnung der Windungen im Vergleich zu der Anordnung aus dem Stand der Technik gemäß der FIG 3 ergibt. Mit anderen Worten kann durch die spezielle Anordnung der Windungen des Teilleiters 24 jeder Spule 20 ein kürzerer Teilleiter 24 verwendet werden, als dies bei einer Anordnung gemäß dem Stand der Technik erforderlich wäre.

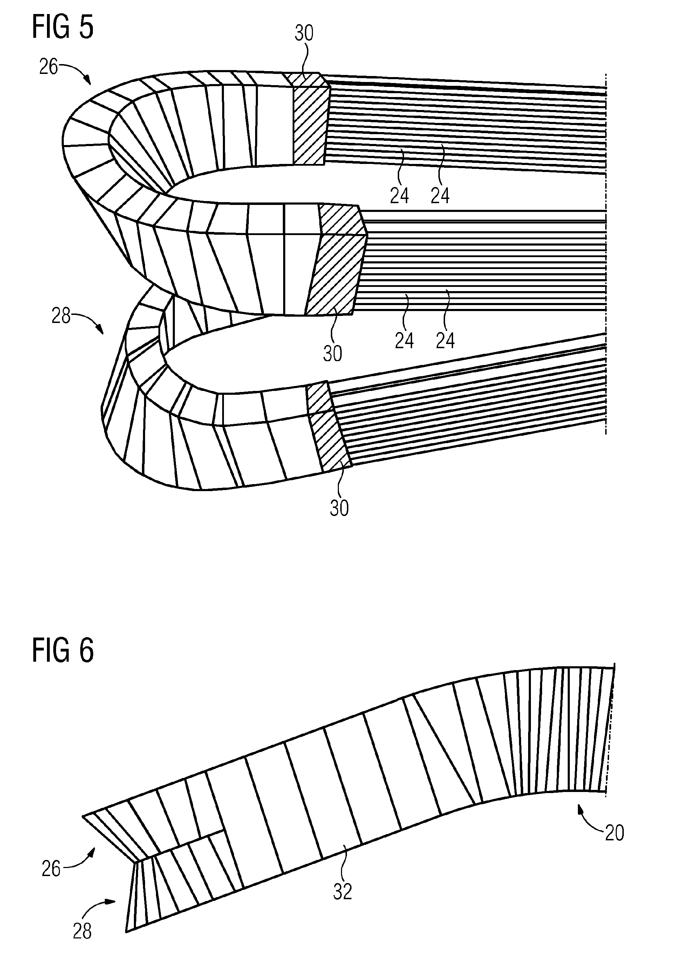

Die Kontur am Ende des Wickelkopfbereichs der 45°-Spule ist durch eine Anordnung ihres Teilleiters im Querschnitt in einer V-Form dargestellt. Um so eine Kontur zu generieren, sind die Windungen des Teilleiters 24 der 45°-Spule entsprechend angeordnet. Dabei ist die 45°-Spule 20 in zweiteiliger Form ausgebildet. Wie auch aus FIG 5 hervorgeht, weist die Spule im Wickelkopfbereich einen ersten Spulenteil 26 und einen zweiten Spulenteil 28 auf. Jeder Schenkel, das heißt der Schenkel des ersten Spulenteils 26 und des zweiten Spulenteils 28, bildet einen Schenkel der V-Form. Die Windungen des Teilleiters 24 des ersten Spulenteils 26 und des zweiten Spulenteils 28 liegen bezüglich der 45°-Ebene, welche sich gegenüber der Stirnfläche S des Trägerteils 22 mit 45° nach unten geneigt erstreckt, nicht senkrecht übereinander. Stattdessen liegen die Windungen des Teilleiters 24 bezogen auf die 45°-Ebene schräg übereinander. Die Windungen des ersten Spulenteils 26 sind derart übereinander angeordnet, dass das Ende eine Neigungsfläche nach unten, d.h. entgegen der Richtung der 0°-Spule, gegenüber der 0°-Ebene, welche in Richtung des Aktivteils 18 orientiert ist, ausbildet. Der zweite Spulenteil 28 weist analog zum ersten Spulenteil 26 durch die schräge Anordnung der Windungen des Teilleiters 24 übereinander eine Neigungsfläche nach oben, d.h. in Richtung der 0°-Spule, gegenüber der 0°-Ebene, welche in Richtung des Aktivteils 18 orientiert ist, auf. Dabei sind die Windungen des Teilleiters 14 der Schenkel der 45°-Spule derart angeordnet, dass sie zusammen eine V-Form bilden.

Auch der Wickelkopfbereich der 90°-Spule weist durch die Anordnung der Windungen ihres Teilleiters 24 im Querschnitt eine V-Form auf. Die Windungen der Teilleiter 24 des ersten Spulenteils 26 der 90°-Spule 20 liegen bezogen auf die 0°-Ebene schräg nebeneinander. Dabei stimmt die Neigungsfläche des ersten Spulenteils 26 mit der Neigungsfläche der 0°-Spule überein. Die Neigungsfläche des ersten Spulenteils 26 der 90°-Spule weist eine Neigung von 45° gegenüber der Stirnfläche S des Trägerteils 22 auf. Mit anderen Worten ist die Neigungsfläche des ersten Spulenteils 26 der 90°-Spule parallel zur Neigungsfläche der 0°-Spule angeordnet. Die Windungen des Teilleiter 24 des zweiten Spulenteils 28 der 90°-Spule sind bezogen auf die 0°-Ebene nebeneinander angeordnet, sodass die Neigungsfläche des zweiten Spulenteils 28 der 90°-Spule parallel zur 0°-Ebene verläuft. Das heißt, die Windungen des Teilleiters 24 des zweiten Spulenteils 28 der 90°-Spule sind nebeneinander auf einer Horizontalen angeordnet.

Wie aus FIG 4 hervorgeht kann ein Teilleiter 24 beispielsweise auch aus mehreren, in diesem Fall zwei, Drähten bestehen, wobei die Drähte des Teilleiters 24 nebeneinander angeordnet sein können. Die Neigung der Spulen kann jeweils einen Toleranzbereich zwischen -25° und +25° aufweisen. Mit Toleranzbereich ist hier ein positiver oder negativer Wert einer Abweichung von dem jeweiligen Wert des Winkels der Neigung der Spule gegenüber der Stirnfläche gemeint.

Wie aus FIG 5 ersichtlich, sind der erste Spulenteil 26 und der zweite Spulenteil 28 unabhängig voneinander isoliert. Des Weiteren geht aus FIG 5 hervor, dass der erste Spulenteil 26 und der zweite Spulenteil 28 eine erste Bandisolierung 30 aufweisen.

FIG 6 stellt eine schematische Darstellung einer Spule mit einer V-Form im Querschnitt des Wickelkopfbereichs dar. Hier sind der erste Spulenteil 26 und der zweite Spulenteil 28 mittels einer zweiten Bandisolierung 32 zusammengehalten.

Insgesamt geht somit eine Optimierung des Wickelkopfes bei drei Phasenentwicklungen durch eine geteilte Spulenform hervor. Der Wickelkopf elektrischer Maschinen gehört zu den magnetisch inaktiven Teilen, die nicht zur Drehmomentenbildung beitragen. Daher ist das Bestreben, die Leiterlänge und die Ausladung des Wickelkopfes möglichst gering zu halten, um unnötigen Platzbedarf, Gewicht und Verluste zu vermeiden. Das Ausführungsbeispiel zeigt eine Drei-Etagenwicklung. Da die drei unterschiedlichen Spulentypen (z.B. 90°, 45° und 0°) der Etagenwicklung unterschiedliche Windungslängen aufweisen, ergibt sich ein unterschiedlicher elektrischer Widerstand. Der Unterschied darf nicht mehr als 3% zwischen den Windungslängen sein. Daher bestimmt die längste Spule die minimale Länge der übrigen beiden Spulen. Aus den Mindestabständen zwischen den Spulen ergibt sich somit die in FIG 2 dargestellte Geometrie. Würde die Spule in V-Form gebaut, so könnte die Teilleiterlänge noch weiter optimiert werden. Dies ist bei der derzeitigen Form der Isolierung nicht möglich, da sonst ein Hohlraum entstehen würde. Wird die Spule zweigeteilt isoliert, so kann die Spulenlänge noch weiter optimiert werden. Es kann beispielhaft eine V-Form der Spule hergestellt werden. Die Leiterlänge im Wickelkopf wird minimiert, dadurch sinken die Verluste, und der Wirkungsgrad steigt. Ferner wird die Baulänge der Maschine verringert, wodurch Gewicht und Kosten der Maschine sinken.

## Patentansprüche

1. Aktivteil (18) einer elektrischen Maschine (10) mit
- mehreren Spulen (20), welche jeweils einen Teilleiter (24) aufweisen, wobei die Spulen (20) durch Windungen ihrer Teilleiter (24) gebildet sind und wobei die Windungen einer Spule (20) jeweils eine vorbestimmte Windungslänge aufweisen;
- einem Trägerteil (22), wobei die Spulen (20) in Nuten des Trägerteils (22) angeordnet sind; wobei
- die Spulen (20) einen Wickelkopfbereich aufweisen, der an einer Stirnfläche des Trägerteils (22) hinausragt; und wobei
- die Spulen (20) in Form einer Etagenwicklung angeordnet sind,
**dadurch gekennzeichnet, dass** zumindest eine der Spulen (20) im Wickelkopfbereich durch eine Anordnung ihres Teilleiters (24) im Querschnitt eine V-Form aufweist.

2. Aktivteil (18) nach Anspruch 1, wobei das Aktivteil (18) als Ständer oder Läufer ausgebildet ist.

3. Aktivteil (18) nach Anspruch 1 oder 2, wobei die Windungslängen der Spulen (20) paarweise zueinander einen Unterschied von maximal 5%, insbesondere 3%, aufweisen.

4. Aktivteil (18) nach einem der vorhergehenden Ansprüche, wobei die Spulen (20) zueinander einen vorgegeben Mindestabstand aufweisen, wobei immer drei der Spulen (20) jeweils in der Etagenwicklung eine Neigung von 0°, 45° und 90° gegenüber der Stirnfläche (S) des Trägerteils (22) aufweisen, wobei die Spule (20) mit der Neigung von 45° eine V-Form im Querschnitt aufweist.

5. Aktivteil (18) nach einem der vorhergehenden Ansprüche, wobei zumindest eine Spule (20) in zweiteiliger Form ausgebildet ist, wobei die Spule (20) im Wickelkopfbereich in einen ersten Spulenteil (26) und in einen zweiten Spulenteil (28) aufgeteilt ist, von denen jeder einen Schenkel der V-Form bildet und wobei der erste (26) und der zweite Spulenteil (28) unabhängig voneinander isoliert sind.

6. Aktivteil (18) nach Anspruch 5, wobei die Teilleiter (24) eine Teilleiterisolierung und die Spulen (20) und/oder der erste Spulenteil (26) und der zweite Spulenteil (28) jeweils eine erste Bandisolierung (30) aufweisen.

7. Aktivteil (18) nach Anspruch 5 oder 6, wobei der erste (26) und der zweite Spulenteil (28) mittels einer zweiten Bandisolierung (32) zusammengehalten sind.

8. Elektrische Maschine (10) mit einem Aktivteil (18) nach einem der vorhergehenden Ansprüche.

9. Verfahren zum Herstellen eines Aktivteils (18) umfassend die Schritte:
- Anordnen von Spulen (20) in Nuten eines Trägerteils (22);
- Bilden eines Wickelkopfbereichs, der an einer Stirnfläche (S) des Trägerteils (22) hinausragt;
- Anordnen der Spulen (20) in Form einer Etagenwicklung, **gekennzeichnet durch**,
- Bereitstellen einer der Spulen (20) mit einem Wickelkopfbereich, der eine V-Form im Querschnitt aufweist.

10. Verfahren zum Herstellen eines Aktivteils (18) nach Anspruch 9, **gekennzeichnet durch** Aufteilen zumindest einer Spule (20) in einen ersten Spulenteil (26) und in einen zweiten Spulenteil (28), wobei der erste (26) und der zweite Spulenteil (28) unabhängig voneinander mittels einer ersten Bandisolierung (30) isoliert und mittels einer zweiten Bandisolierung (32) zusammengehalten werden, wodurch im Wickelkopfbereich im Querschnitt eine V-Form gebildet wird.
